# EUROPÄISCHE PATENTSCHRIFT

(11) **EP 2 168 134 B1**
(45) Veröffentlichungstag und Bekanntmachung des Hinweises auf die Patenterteilung: **22.05.2013**
(21) Anmeldenummer: 08760065.6
(22) Anmeldetag: 27.05.2008
(51) Int. Cl.: H01H 39/00, H02H 11/00

(54) **VERPOLSCHUTZEINRICHTUNG**
POLARITY REVERSAL PROTECTION UNIT
UNITÉ DE PROTECTION CONTRE L'INVERSION DE POLARITÉ

(30) Priorität: 13.07.2007 DE 102007033183
(43) Veröffentlichungstag der Anmeldung: 31.03.2010
(73) Patentinhaber: Auto-Kabel Managementgesellschaft mbH, 79688 Hausen i.W. (DE)
(72) Erfinder: GRONWALD, Frank, 50181 Bedbur (DE)
(74) Vertreter: Cohausz & Florack
(86) Internationale Anmeldenummer: PCT/EP2008/056467
(87) Internationale Veröffentlichungsnummer: WO 2009/010328

(56) Entgegenhaltungen:
- DE-A1- 10 111 252
- DE-A1- 19 620 204
- DE-A1- 19 719 919
- DE-A1- 19 732 650
- DE-A1- 19 901 351

## Beschreibung

Die Anmeldung betrifft im Allgemeinen eine Verpolschutzeinrichtung zum Schutz von Verbrauchern, insbesondere von Verbrauchern eines Bordnetzes eines Kraftfahrzeuges, gegen eine Verpolung einer Versorgungsbatterie, insbesondere bei einem Fremdstart.

Kraftfahrzeuge weisen immer umfassendere Bordnetze mit einer Vielzahl von Verbrauchern auf. Ein Bordnetz wird im Allgemeinen von einer Fahrzeugbatterie mit Energie versorgt. Der negative Pol der Fahrzeugbatterie ist üblicherweise mit der Fahrzeugkarosserie verbunden. Einige der Verbraucher eines Bordnetzes weisen eine richtungsabhängige Stromflusscharakteristik auf und können, falls sie mit einem Strom entgegen ihrer Stromflusscharakteristik betrieben werden, beschädigt oder sogar zerstört werden. Beispiele solcher Verbraucher sind Elektrolytkondensatoren oder Halbleiterschalter. Insbesondere bei Elektrolytkondensatoren kann es ferner zu Folgeschäden kommen, da sie bei einer falschen Verpolung explodieren und weitere Bauteile beschädigen können.

Eine Verpolung kann auftreten, wenn eine neue Batterie ins Fahrzeug eingebaut wird oder die Batterie kurzzeitig vom Bordnetz getrennt und dann wieder angeschlossen wird. Ferner kann es insbesondere bei einem Fremdstart oder bei einer Ladung der Batterie zu einer Verpolung kommen. Darüber hinaus besteht die Gefahr, dass zwar eine korrekte Polung zum Beispiel einer Fremdbatterie vorliegt, jedoch die Betriebsspannung dieser Fremdbatterie die Betriebsspannung der Fahrzeugbatterie übersteigt. Die erhöhte Spannung kann ebenfalls zu Beschädigungen von Verbrauchern innerhalb des Bordnetzes führen. Zum Beispiel kann ein Laden einer Batterie eines PKWs mit einer LKW-Batterie, da diese Batterie eine höhere Betriebsspannung aufweist, zur Beschädigung eines Bordnetzes führen.

Eine Reparatur eines Bordnetzes infolge von Zerstörung durch beispielsweise eine Verpolung kann zu hohen finanziellen Kosten führen.

Aus den oben erwähnten Gründen ist ersichtlich, dass der Einsatz einer Verpolschutzeinrichtung in Kraftfahrzeugen zum Schutz der Verbraucher eines Bordnetzes erforderlich ist.

Aus dem Stand der Technik sind Verpolschutzschaltungen bekannt. Beispielsweise ist in der DE 101 11 252 A1 eine Verpolschutzschaltung offenbart, die ein pyrotechnisches Trennelement aufweist. Die Sprengladung wird gezündet, wenn ein Strom durch eine zur Überwachurig eines Fremdstartstützpunkt vorgesehene Diode fließt. Diese Diode dient zugleich als Auslöserelement und Detektoreinrichtung. Ein Strom fließt nur, wenn eine falsche Polung einer angeschlossenen Batterie vorliegt. In diesem Fall wird die hierfür vorgesehene Diode in Durchflussrichtung betrieben. Durch die vom Strom in der Diode erzeugte Wärme wird die Sprengladung gezündet. Das metallische Trennelement weist eine Sollbruchstelle auf, derart, dass bei Zündung des die Diode umgebenen pyrotechnischen Trennelements das Bordnetz von der Bordnetzversorgung getrennt wird.

Nachteilig bei dieser Konstruktion ist jedoch, dass die Diode innerhalb des pyrotechnischen Trennelements angeordnet ist. Bei einer Zündung des pyrotechnischen Trennelements wird somit die Detektoreinrichtung mit zerstört. Darüber hinaus wird das metallische Trennelement zerstört. Eine Schutzummantelung ist zum Schutz angrenzender Bauteile vor heißen und kalten Partikeln notwendig. Eine kostengünstige Herstellung und Reparatur einer solchen Verpolschutzschaltung ist nicht gegeben.

Daher liegt der Anmeldung die technische Aufgabe zugrunde, eine Verpolschutzeinrichtung zum Schutz von Verbrauchern zur Verfügung zu stellen, die einerseits günstig in der Herstellung und Reparatur ist und andererseits einen fehlerfreien Betrieb gewährleistet.

Diese und weitere Aufgaben werden anmeldungsgemäß gelöst durch eine Verpolschutzeinrichtung. Die Verpolschutzeinrichtung umfasst eine pyrotechnische Trenneinheit, eine Detektoreinrichtung, ein Auslöserelement, ein erstes mit zumindest einem Verbraucheranschluss elektrisch verbundenem Anschlusselement und ein zweites einen Versorgungsstützpunkt elektrisch mit dem ersten Anschlusselement verbindendes Anschlusselement. Die pyrotechnische Trenneinheit ist an zumindest einem der Anschlusselemente angeordnet. Das Auslöserelement weist einen ersten gegenüber den Anschlusselementen elektrisch isolierten Anschluss zur Detektoreinrichtung und einen zweiten Anschluss zu einem der Anschlusselemente auf, derart, dass ein Stromfluss in dem Auslöserelement eine Zündung der pyrotechnischen Trenneinheit bewirkt. Die Zündung der pyrotechnischen Trenneinheit bewirkt eine elektrische Trennung des ersten und zweiten Anschlusselements.

Vorzugsweise kann die anmeldungsgemäße Verpolschutzeinrichtung in Kraftfahrzeugen eingesetzt werden. Hierbei kann die Verpolschutzeinrichtung zwischen einem Versorgungsstützpunkt, insbesondere einem Fremdstartstützpunkt oder einem Ladestützpunkt, und einem Verbraucheranschluss, insbesondere ein Anschlusspunkt eines Bordnetzes, angeordnet sein. Im regulären Betrieb sind die Anschlusselemente miteinander elektrisch verbunden, wodurch die Verbraucher eines Bordnetzes mit Energie versorgt werden können.

Der positive Pol der Fahrzeugbatterie kann sowohl am ersten als auch am zweiten Anschlusselement angeordnet sein. Der negative Pol der Batterie ist im Allgemeinen direkt mit der Fahrzeugkarosserie verbunden.

Ein Auslöserelement ist zwischen den Anschlusselementen angeordnet, um eine an dem Auslöserelement angeordnete pyrotechnische Trenneinheit im Falle einer Verpolung zu zünden. Vorzugsweise ist das Auslöserelement zumindest teilweise innerhalb der pyrotechnischen Trenneinheit angeordnet.

Es ist erkannt worden, dass eine unmittelbare Zündung der pyrotechnischen Trenneinheit in Folge einer Verpolung durch einen Stromfluss von einem der Anschlusselemente zur Detektoreinrichtung ausgelöst werden kann. Hierzu weist das Auslöserelement zwei Anschlüsse auf. Der zweite Anschluss des Auslöserelements ist mit einem der Anschlusselemente verbunden. Beispielsweise kann dieser zweite Anschluss mit dem zweiten Anschlusselement verbunden sein.

Ferner weist das Auslöserelement einen ersten Anschluss auf, der mit der Detektoreinrichtung verbunden ist. Dieser erste Anschluss ist gegenüber den Anschlusselementen isoliert. Der erste Anschluss kann zumindest von der Detektoreinrichtung bis zum Übergang des Anschlusselements zur pyrotechnischen Trenneinheit vollständig mit einem Isolator umgehen sein. Im Falle einer Verpolung wird die Detektoreinrichtung leitend. Da das Auslöseelement im Bereich des ersten Anschlusses gegenüber dem Anschlusselement isoliert ist, wird ein von einem Anschlusselement direkt eingekoppelter Stromfuss über den ersten Anschluss zur Detektoreinrichtung vermieden. Ein Strom wird nur über den zweiten Anschluss in das Auslöseelement eingekoppelt, so dass im Falle einer Verpolung ein Strom durch das an der pyrotechnische Trenneinheit angeordnete Auslöserelement zur Detektoreinrichtung fließt. Durch die abgegebene Wärme des Auslöserelements wird die thermisch aktivierbare pyrotechnische Trenneinheit gezündet.

Ein sicherer Schutz von Verbrauchern bei einer Verpolung durch eine unmittelbare Trennung der Verbraucher von einem Versorgungsstützpunkt wird gewährleistet. Die aktive Verpolschutzeinrichtung zeichnet sich durch eine kompakte und kostengünstige Herstellung aus.

Gemäß eines weiteren Ausführungsbeispiels ist die Detektoreinrichtung von außen an den Anschlusselernenten angeordnet. Zumindest eines der Anschlusselemente kann eine Öffnung aufweisen. Durch diese Öffnung kann der erste isolierte Anschluss des ersten Auslöseelements in das Innere des Anschlusselements, beispielsweise in den Bereich der Trenneinheit, geführt werden. Beispielsweise weist das zweite Anschlusselement eine solche Öffnung auf. Die Öffnung kann beispielsweise durch eine Bohrung hergestellt werden. Vorzugsweise erfolgt eine Bohrung horizontal, jedoch sind auch andere Verläufe der Bohrung vorstellbar. Das Auslöserelement kann mit der außerhalb angeordneten Detektoreinrichtung verbunden werden. Der erste Anschluss samt der ihn umgebenen Isolierschicht kann stoffschlüssig zum Anschlusselement innerhalb der Öffnung angeordnet sein.

Durch die Anordnung der Detektoreinrichtung außerhalb der Anschlusselemente wird ein zuverlässiger Betrieb ermöglicht. Ein Austausch der Detektoreinrichtung ist nur mit einem geringen Aufwand verbunden. Ferner kann die Detektoreinrichtung im Falle einer zündung wieder verwendet werden. Sie wird bei einer Trennung der Anschlusselemente durch die Zündung der pyrotechnischen Trenneinheit nicht zerstört. Durch eine Wiederverwendung der Detektoreinrichtung können Reparaturkosten eingespart werden.

Vorzugsweise wird eine Zündung des pyrotechnischen Trennelements durch eine durch den Stromfluss im Auslöserelement erzeugte Joulesche Wärme hervorgerufen. Jeder Stromfluss durch einen elektrischen Widerstand bringt eine Temperaturerhöhung des Widerstands mit sich. Die erzeugte Joulesche Wärme Q hängt dabei proportional von dem Produkt des Widerstands R und dem Quadrat des den Widerstand durchfließenden Stroms I ab (Q - R*I²). Darüber hinaus weist der Widerstand R unter anderem eine Abhängigkeit vom Querschnitt A des Widerstandes R und dem spezifischen Widerstand p des verwendeten Werkstoffs auf.

Die zur Zündung der pyrotechnischen Trenneinheit benötigte Joulesche Wärme hängt von dem verwendeten Sprengmittel ab, insbesondere von der chemischen Zusammensetzung des Sprengmittels. Als Sprengmittel kann beispielsweise ein Thermit eingesetzt werden. Es lassen sich jedoch im Prinzip alle Mischungen verwenden, die thermisch aktiviert werden können, also durch Zufuhr von Wärme einen genügend hohen Gasdruck zum Lösen der kraftschlüssigen Verbindung erzeugen können. Insbesondere sollte die pyrotechnische Trenneinheit eine hohe Lebensdauer aufweisen, beispielsweise der Lebensdauer eines Kraftfahrzeugs entsprechend.

Gemäß der Anmeldung wird als Auslöserelement ein Widerstand mit einem Querschnitt und aus einem Werkstoff eingesetzt, bei dem ein Stromfluss unmittelbar eine hohe Joulesche Wärme erzeugt. Ferner bestehen die Anschlusselemente aus einem Material, bei dem ein Stromfluss nur eine geringe Joulesche Wärme hervorruft. Bevorzugt ist dabei, wenn die pyrotechnische Trenneinheit eine Aktivierungstemperatur aufweist, die über der von einem zulässigen Stromfluss von dem Versorgungsstützpunkt zum Verbraucheranschluss erzeugten Jouleschen Wärme liegt. Der zulässige Stromfluss kann derart sein, dass dieser bei einem normalen Ladevorgang zwischen dem Fremdstartstützpunkt und der zu ladenden Batterie liegt. Im Falle einer vollständig entladenen Batterie können kurzzeitig Ströme von über 100 A fließen. Darüber hinaus ist bevorzugt, wenn die im Auslöserelement erzeugte Joulesche Wärme zumindest oberhalb der notwendigen Aktivierungstemperatur der pyrotechnischen Trenneinheit liegt. Diese Aktivierungstemperatur liegt oberhalb der von den Anschlusselementen selbst abgegebenen Joulesche Wärme. Dadurch kann gewährleistet werden, dass eine fehlerhafte Zündung im Falle eines Ladevorgangs verhindert wird und gleichzeitig bei einer Verpolung eine unmittelbare Trennung der Verbraucher von dem Versorgungsstützpunkt erfolgt.

Die abgebare Joulesche Wärme sowohl des Auslöserelements als auch der Anschlusselemente kann einerseits über deren Querschnitt und andererseits über den materialabhängigen spezifischen Widerstand der Aktivierungstemperatur der pyrotechnischen Trenneinheit angepasst werden. Beispielsweise führt eine Vergrößerung des Querschnitts zu einem kleineren Widerstand. Ferner können unterschiedliche Werkstoffe eingesetzt werden, um die gewünschte erzeugbare Joulesche Wärme der jeweiligen Bauteile zu erhalten. Insbesondere sollte der spezifische Widerstand des Auslöserelements größer als der spezifische Widerstand der Anschlusselemente sein. Darüber hinaus lässt sich, eventuell in geringem Maße beeinflusst durch die äußeren klimatischen Bedingungen, die bei der Auslegung zu berücksichtigen sind, ein Aktivierungsstrom des Auslöserelements justieren.

Die Detektoreinrichtung umfasst bevorzugt zumindest ein Halbleiterelement. Als Halbleiterelemente können beispielsweise Dioden oder Transistoren eingesetzt werden. Zusätzlich kann die Detektoreinrichtung weitere Bauteile, wie zum Beispiel einen Begrenzungswiderstand aufweisen. Ein Begrenzungswiderstand könnte für eine Begrenzung des Aktivierungsstroms verwendet werden.

In einer weiteren Ausgestaltung weist die Detektoreinrichtung einen Anschluss zum Minuspol der Batterie auf. Dieser Anschluss ist gegenüber den Anschlusselementen ebenso isoliert, wie der erste Anschluss des Aulöserelements. Insbesondere bei der Verwendung von Dioden als Detektoreinrichtung ist eine direkte Erfassung einer Verpolung möglich. Beispielsweise kann die Kathode der Diode mit einem Anschlusselement über den isolierten Anschluss und dem Auslöserelement verbunden sein, während die Annode mit dem Minuspol der Batterie verbunden ist. Bei einer Verpolung, wenn also ein negativer Pol an den Versorgungsstützpunkt angeschlossen wird, kann ein Strom durch die Diode fließen. Die Diode wird in Durchlassrichtung betrieben, da das Potential an der Kathode einen negativen Wert gegenüber dem Potential an der Annode aufweist. Hierdurch wird ein Strompfad von den Anschlusselementen über den isolierten ersten Anschluss und das Auslöserelement zur Masse hergestellt. Eine unmittelbare Zündung der pyrotechnischen Trenneinheit ist die Folge, da über dem Strompfad ein das Auslöserelement erwärmender Strom fließt.

Gemäß eines Ausführungsbeispiels ist zumindest das eine Halbleiterelement eine Zenerdiode. Zenerdioden verhalten sich in Durchlassrichtung wie normale Dioden. Sie zeichnen sich besonders dadurch aus, dass sie in Sperrrichtung ab einer bestimmten Spannung, der Durchbruchspannung, leitend werden. Es kann eine Zenerdiode verwendet werden, deren Durchbruchspannung zumindest oberhalb der Betriebsspannung der Fahrzeugbatterie liegt. Bei einer Fahrzeugbatterie kann die Zenerdiode als Durchbruchspannung, beispielsweise 13 V, aufweisen. Eine höhere angelegte Spannung führt dazu, dass die Zenerdiode leitend wird. Auch in diesem Fall wird ein Strompfad über das Auslöserelement hergestellt und eine Zündung der pyrotechnischen Trenneinheit erfolgt. Eine Zerstörung von Verbrauchern aufgrund zu hoher Spannungen wird vermieden.

Vorteilhafterweise wird der zweite Anschluss des Auslöserelements an eines der Anschlusselemente angeschweißt oder angelötet. Dies gewährleistet eine gute elektrische Verbindung. Darüber hinaus ist der Herstellungsaufwand gering.

Die Anschlusselemente können beispielsweise durch Verkleben elektrisch und mechanisch miteinander verbunden werden. Dies gewährleistet einen sicheren Stoffschluss verbunden mit einem geringen Herstellungsaufwand. Dann kann insbesondere das erste Anschlusselement eine einfache Geometrie aufweisen. Auch etwaige weitere Möglichkeiten, die Anschlusselemente stoffschlüssig zu verbinden, sind möglich.

Vorteilhaft ist darüber hinaus eine kraftschlüssige Verbindung der Anschlusselemente. Dann kann eine Verbindung der Anschlusselemente insbesondere zerstörungsfrei gelöst werden. Eine Wiederverwendung der Anschlusselemente wird ermöglicht. Lediglich das Auslöserelement und die pyrotechnische Trenneinheit müssten erneuert werden. Dies führt zu einer signifikanten Kostenersparnis und einem geringen Reparaturaufwand.

Das zweite Anschlusselement weist beispielsweise eine Aufnahme auf. Eine einfache Montage ist dadurch möglich. Insbesondere lassen sich Kosten sparen, wenn die Aufnahme einstückig aus dem zweiten Anschlusselement geformt ist. Gemäß einer Ausgestaltung weist die Aufnahme die Form eines konisch geformten Topfs auf. Eine solche Form gewährleistet eine einfache Verbindungsherstellung mit dem ersten Anschlusselement. Insbesondere wird dadurch eine optimale Trennung der beiden Anschlusselemente ermöglicht.

Gemäß eines Ausführungsbeispiels ist das pyrotechnische Trennelement in der Aufnahme des zweiten Anschlusselements angeordnet, insbesondere am Boden des konisch geformten Topfs. Eine Anordnung der Trenneinheit an dem Boden der Aufnahme führt zu einer einfachen Herstellung der Verpolschutzeinrichtung verbunden mit einer sicheren elektrischen Trennung.

Beispielsweise könnte zunächst der zweite Anschluss des Auslöserelements an eine Seitenwand der Aufnahme des zweiten Anschlusselements angeschweißt oder angelötet werden. Der erste isolierte Anschluss des Auslöserelements wird mit der Detektoreinrichtung verbunden. Dieser Strompfad kann beispielsweise in einer horizontalen Ebene verlaufen. Dann kann der Boden der Aufnahme mit der pyrotechnischen Trenneinheit befüllt werden. Das Auslöserelement kann an der pyrotechnischen Trenneinheit angeordnet sein, insbesondere eine Anordnung des Auslöserelements innerhalb der pyrotechnischen Trenneinheit ist bevorzugt. Eine optimale Zündung ist die Folge. Anschließend kann die Verbindung zwischen dem ersten und dem zweiten Anschlusselement, zum Beispiel durch Verkleben, hergestellt werden. Der Herstellungsaufwand der Verpolschutzeinrichtung ist gering.

Ferner weist das erste Anschlusselement in einer vorteilhaften Ausgestaltung der erfindungsgemäßen Verpolschutzeinrichtung einen zu der Aufnahme des zweiten Anschlusselements korrespondierenden Vorsprung auf. Insbesondere ist der Vorsprung im leitenden Zustand kraft- und stoffschlüssig mit der Aufnahme des zweiten Anschlusselements verbunden. Durch die Verbindung ist ein optimaler Stromfluss durch die beiden Anschlusselemente gegeben. Der durch eine Zündung der pyrotechnischen Trenneinheit hervorgerufene Gasdruck kann die beiden Anschlusselemente zerstörungsfrei voneinander lösen.

Gemäß eines weiteren Ausführungsbeispiel ist auch der Vorsprung des ersten Anschlusselements einteilig aus dem Anschlusselement geformt. Eine kostengünstigen Herstellung ist beispielsweise dann gegeben, wenn die Anschlusselemente aus Flachteile gezogen werden. Beispielsweise kann das erste Anschlusselement auf das zweite Anschlusselement gelegt werden und ein Stempel kann gleichzeitig den Vorsprung formen und in die Aufnahme des zweiten Anschlusselements treiben, um die Anschlusselemente miteinander zu fügen.

Eine bevorzugte Verbindung zwischen den Anschlusselementen ist ein konischer Presssitz. Die Verbindung der Anschlusselemente kann hergestellt werden indem der Vorsprung in die sich verjüngende Aufnahme gefügt wird. Ein verkleben oder sonstiges Verbinden der Anschlusselemente kann entfallen. Neben einer einfachen Herstellung wird eine zerstörungsfreie Lösung der Anschlusselemente gewährleistet.

Die Verpolschutzeinrichtung kann eine Erfassungseinrichtung aufweisen. Diese Erfassungseinrichtung kann beispielsweise einem Benutzer anzeigen, dass der Versorgungsstützpunkt von dem Verbraucheranschluss getrennt worden ist. Der Benutzer kann dann adäquat auf die Trennung reagieren und beispielsweise eine Reparatur einleiten.

Die Verpolschutzeinrichtung kann ausschließlich aus den zumindest zwei Anschlusselementen, der Detektoreinrichtung, der pyrotechnischen Trenneinheit und dem Auslöserelement gebildet sein, aber ebenso beliebige weitere Komponenten umfassen. Insbesondere kann die Verpolschutzeinrichtung einen Versorgungsstützpunkt, einen Batteriepol oder eine Batterie umfassen.

Ein weiterer Aspekt der Anmeldung ist ein Verfahren zum Unterbrechen eines Stromes, insbesondere mit einer erfindungsgemäßen Verpolschutzeinrichtung. Bei dem Verfahren fließt ein erster Strom von einem Versorgungsstützpunkt über ein mit einem ersten Anschlusselement verbundenes zweites Anschlusselement zu einem Verbraucheranschluss. Darüber hinaus fließt bei dem Verfahren ein zweiter Strom durch ein Auslöserelement von einem der Anschlusselemente über einen ersten isolierten Anschluss zu einer Detektoreinrichtung, derart dass dieser zweite Strom eine Zündung einer pyrotechnischen Trenneinheit bewirkt. Die Zündung der pyrotechnischen Trenneinheit unterbricht den Strom vom zweiten Anschlusselement zum ersten Anschlusselement.

Nachfolgend wird die Erfindung anhand von Ausführungsbeispiele zeigenden Zeichnungen näher erläutert. Es zeigen:
- Fig.1: eine schematische Schnittansicht eines ersten Ausführungsbeispiels einer Verpolschutzeinrichtung,
- Fig.2: eine schematische Schnittansicht des ersten Ausführungsbeispiels der Verpolschutzeinrichtung im leitenden Zustand,
- Fig.3: eine Schaltungsanordnung einer Verpolschutzeinrichtung.

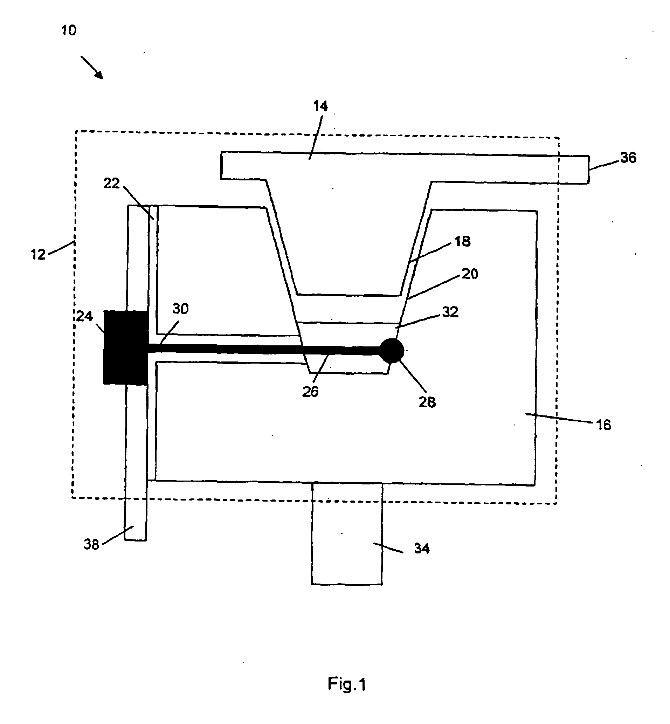

Fig.1 zeigt eine vereinfachte Konstruktion einer erfindungsgemäßen aktiven Verpolschutzeinrichtung. Dabei ist die Verpolschutzeinrichtung so konstruiert, dass eine kostengünstige Herstellung und Reparatur und zeitgleich ein sicherer Schutz von Verbrauchern gewährleistet werden kann. Darüber hinaus ist eine kompakte Bauweise der Verpolschutzeinrichtung gewährleistet.

Die in Fig.1 gezeigte Konstruktion 10 umfasst die Verpolschutzeinrichtung 12. Die Verpolschutzeinrichtung 12 ist zwischen einem Verbraucheranschluss 36 und einem Versorgungsstützpunkt 34 angeordnet. An den Verbraucheranschluss 36 kann beispielsweise ein Bordnetz eines Kraftfahrzeuges angeschlossen sein. Der Versorgungsstützpunkt 34 kann insbesondere ein Fremdstartstützpunkt oder auch ein Ladestützpunkt sein. Der Versorgungsstützpunkt 34 ist mit einem elektrisch leitenden zweiten Anschlusselement 16 der Verpolschutzeinrichtung 12 verbunden. Bevorzugt ist eine einstückige Herstellung des zweiten Anschlusselements 16, insbesondere den Versorgungsstützpunkt 34 umfassend.

Das Anschlusselement 16 weist ferner eine Aufnahme 20 auf. Am Boden der Aufnahme 20 ist eine pyrotechnische Trenneinheit 32 angeordnet. Die pyrotechnische Trenneinheit 32 könnte beispielsweise auch an den Seitenwänden der Aufnahme 20 oder an dem ersten Anschlusselement 14 angeordnet sein. Vorzugsweise ist innerhalb der pyrotechnischen Trenneinheit 32 ein Auslöserelement 26 angeordnet, dessen abgegebene Joulesche Wärme die thermisch aktivierbare pyrotechnische Trenneinheit 32 zünden kann. Das Auslöserelement 26 könnte auch am Rand der pyrotechnischen Trenneinheit 32 angeordnet sein. Darüber hinaus umfasst das Auslöserelement 26 einen ersten Anschluss 30, der mit einer Detektoreinrichtung 24 verbunden ist.

Die Detektoreinrichtung 24 kann zumindest ein Halbleiterelement umfassen, insbesondere zumindest eine Zenerdiode 46. Die Detektoreinrichtung 24 ist bevorzugt außerhalb des zweiten Anschlusselements 16 angeordnet. Eine Anordnung der Detektoreinrichtung 24 außerhalb des ersten Anschlusselements 14 wäre ebenso wie eine Anordnung innerhalb der Anschlusselemente 14, 16, insbesondere innerhalb der pyrotechnischen Trenneinheit 32, möglich. Eine Anordnung außerhalb der Anschlusselernente 14, 16 gewährleistet, dass die Detektoreinrichtung 24 bei einer Zündung der pyrotechnischen Trenneinheit 32 nicht zerstört wird. Dann kann die Detektoreinrichtung 24 wieder verwendet werden.

Eine Isolationsschicht 22 ist zwischen der Detektoreinrichtung 24 und dem zweiten Anschlusselement 16 angeordnet. Ebenso ist diese Isolationsschicht 22 zwischen dem ersten Anschluss 30 des Auslöserelements 26 und dem zweiten Anschlusselement 16 angeordnet. Der erste isolierte Anschluss 30 könnte ebenso durch das erste Anschlusselement 14 mit der Detektoreinrichtung 24 verbunden sein. Die Detektoreinrichtung 24 weist darüber hinaus einen Masseanschluss 38 auf, der gegenüber den Anschlusselementen 14, 16 durch die Isolationsschicht 22 isoliert ist.

Das Auslöserelement 26 weist ferner einen zweiten Anschluss 28 auf. Die Verbindung des zweiten Anschlusses 28 mit dem zweiten Anschlusselement 16 kann durch einen Löt- oder Schweißpunkt hergestellt sein. Der zweite Anschluss 28 könnte auch mit dem ersten Anschlusselement 14 verbunden sein. Ferner können die Anschlüsse 28, 30 aus dem gleichen Werkstoff wie das Auslöserelement 26 oder aus einem anderen Werkstoff sein. Beispielsweise könnte der Werkstoff des Auslöserelements 26 entsprechend der benötigten Jouleschen Wärme angepasst sein.

Das erste elektrisch leitende Anschlusselement 14 ist mit dem Verbraucheranschluss 36 verbunden. Insbesondere kann das erste Anschlusselement 14 einstückig, den Verbraucheranschluss 36 umfassend, hergestellt werden. Darüber hinaus weist das erste Anschlusselement 14 einen Vorsprung 18 auf. Der Vorsprung 18 weist bevorzugt eine zu der konischen Topfform der Aufnahme 20 korrespondierende Form auf.

Ein Stromfluss durch das Auslöserelement 26 zur Zündung des pyrotechnischen Trennelements 32 bei einer Verpolung ist gemäß der Verpolschutzeinrichtung 12 gewährleistet.

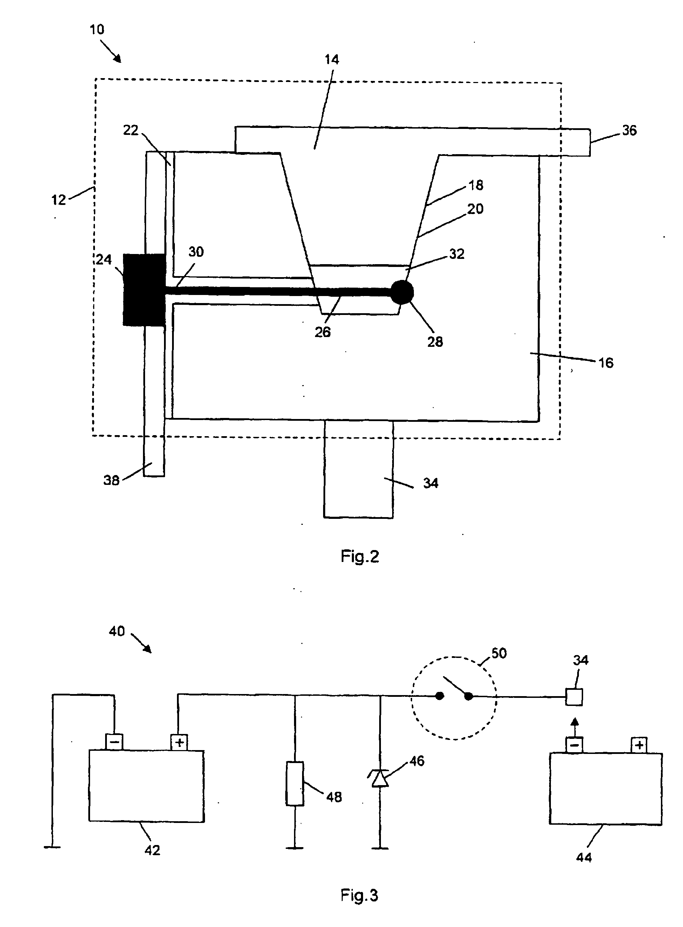

Die Fig.2 zeigt die Konstruktion 10 aus Fig.1 in ihrem leitenden Zustand. Der Vorsprung 18 des ersten Anschlusselements 14 ist kraft- und stoffschlüssig mit der Aufnahme 20 des zweiten Anschlusselements 16 verbunden. Diese Verbindung kann durch Verkleben erfolgen. Ebenso ist als Verbindung ein konischer Presssitz vorstellbar. Ein Strompfad zwischen dem Versorgungsstützpunkt 34 und dem Verbraucheranschluss 36 ist hergestellt.

Die Fig.3 zeigt einen vereinfachten Schaltkreis 40 einer Anordnung der erfindungsgemäßen Konstruktion 10 der Figuren 1 und 2. Die Bezugszeichen der bekannten Bauteile werden übernommen.

Die Anordnung 40 umfasst eine Batterie 42, beispielsweise eine Fahrzeugbatterie, dessen negativer Pol mit der Fahrzeugkarosse verbunden ist. Die Fahrzeugkarosserie kann somit als Massepotential betrachtet werden. An dem positiven Pol der Batterie 42 ist ein Verbrauchernetz 48, beispielsweise ein Bordnetz, angeschlossen. Dessen anderer Anschluss ist mit der Fahrzeugkarosserie verbunden. Parallel zum Verbrauchernetz 48 ist eine Zenerdiode 46 angeordnet. Die Zenerdiode 46 fungiert als Detektoreinrichtung 24 aus Fig.1 oder Fig.2. Die Annode der Zenerdiode 46 ist mit Massepotential verbunden. Neben der Kathode der Zenerdiode 46 und dem nicht auf Masse liegenden Anschluss des Verbrauchernetzes 48 ist ein pyrotechnischer Trennschalter 50 mit dem positiven Pol der Batterie 42 verbunden. Am zweiten Anschluss des Trennschalters 50 ist ein Versorgungsstützpunkt 34, beispielsweise ein Fremdstartstützpunkt angeordnet. An den Versorgungsstützpunkt 34 kann eine zweite Batterie 44 angeschlossen werden. In der Fig.3 ist angedeutet, dass eine Verpolung vorliegt, wenn der negative Pol der Batterie 44 an den Versorgungsstützpunkt 34 angeschlossen wird.

Die Funktionsweise der Verpolschutzeinrichtung 12 gemäß den Figuren 1 bis 3 wird im Folgenden näher erläutert.

Im Normalbetrieb, d.h. im leitenden Zustand gemäß Fig.2, fließt ein Strom von dem Versorgungsstützpunkt 34 über die Anschlusselemente 14, 16 zu dem Verbraucheranschluss 36, an dem insbesondere ein Bordnetz angeschlossen sein kann. Einer der beiden Anschlusselemente 14, 16 kann mit dem positiven Pol der Fahrzeugbatterie verbunden sein. Aus Gründen der Übersicht ist dies weder in Fig.1 noch in Fig.2 dargestellt. Ein angeschlossenes Bordnetz kann Verbraucher enthalten, die durch eine Verpolung beschädigt oder zerstört werden können.

Eine Verpolung kann beispielsweise vorliegen, wenn ein Fremdstart durchgeführt werden soll. Eine Verpolung kann ebenso bei einem Ladungsvorgang auftreten. Bei einer Verpolung wird zum Beispiel der negative Pol einer Fremdbatterie 44 an den Versorgungsstützpunkt 34 angeschlossen. Damit weisen die Anschlusselemente 14, 16 ein negatives Potential gegenüber Masse auf. Dies hat zur Folge, dass der Masseanschluss 38 der Detektoreinrichtung 24 ein positives Potential gegenüber den Anschlusselementen 14, 16 aufweist. Wenn als Detektoreinrichtung 24 eine Zenerdiode 46 eingesetzt wird, wird ein Strompfad zwischen den Anschlusselementen 14, 16 und dem Masseanschluss 38 hergestellt. Der eingekoppelte Strom erzeugt in dem Auslöserelement 26 eine Joulesche Wärme, die zumindest ausreichend ist, eine Zündung der pyrotechnische Trenneinheit 32 herbeizuführen. Diese ursächlich durch die Verpolung bewirkte Zündung erfolgt unmittelbar.

Durch den Gasdruck der Zündung wird der Vorsprung 18 von der Aufnahme 20 getrennt. Der Stromfluss zwischen dem Versorgungsstützpunkt 34 und Verbraucheranschluss 36 ist unterbrochen. Die Trennung der beiden Anschlusselemente 14, 16 erfolgt unverzüglich. Ein sicherer Schutz der Verbraucher eines Bordnetzes kann gemäß der erfindungsgemäßen Verpolschutzeinrichtung 12 gewährleistet werden.

Die Lösung des ersten Anschlusselements 14 und des zweiten Anschlusselementes 16 kann zerstörungsfrei durchgeführt werden. Lediglich das Auslöserelement 26 und die pyrotechnische Trenneinheit 32 müssen bei einer Reparatur erneuert werden, während die übrigen Bauelemente wieder verwendet werden können. Eine kostenintensive und aufwendige Reparatur der Verpolschutzeinrichtung entfällt.

Aus Gründen der Übersichtlichkeit ist in den Figuren 1 bis 3 eine Erfassungseinrichtung nicht dargestellt. Diese könnte einem Benutzer anzeigen, dass eine Abtrennung des Bordnetzes vom Versorgungsstützpunkt 34 erfolgt ist. Beispielsweise könnte ein Stromfluss durch die Detektoreinrichtung 24 als Indikator genutzt werden.

Die Verpolschutzeinrichtung 12 schützt ein Verbrauchernetz 48 nicht nur vor einer Verpolung, sondern auch vor einer Zerstörung aufgrund einer möglicherweise zu hohen anliegenden Spannung. Beispielsweise weist eine Batterie 42 eines PKWs im Allgemeinen eine Spannung von 12 V auf. Dementsprechend sind einige Verbraucher ausgelegt und größere Spannungswerte können zu Zerstörungen der angeschlossenen Verbraucher führen. Zum Beispiel bei einem Fremdstart durch eine Batterie 44 eines LKWs. Eine LKW-Batterie 44 weist im Allgemeinen eine Spannung von 24 V auf.

Ausgehend von diesen Spannungswerten der Batterien 42, 44, wird eine Fremdbatterie 44 mit einer überhöhten Spannung an den Versorgungsstützpunkt 34 angeschlossen. Als Detektoreinrichtung 24 wird eine Zenerdiode 46 mit einer Durchbruchspannung gewählt, die zumindest oberhalb von 12 V liegt, beispielsweise bei 13 V. Da die Fremdbatterie 44 eine höhere Spannung, beispielsweise 24 V, aufweist, wird die Zenerdiode 46 unmittelbar leitend. Dies hat zur Folge, dass ein Strom im Auslöserelement 26 eine Joulesche Wärme erzeugt, die unmittelbar zur Zündung der pyrotechnischen Trenneinheit 32 führt. Der Stromfluss zu den Verbrauchern eines Bordnetzes wird unmittelbar unterbrochen, so dass keine Verbraucher beschädigt oder zerstört werden können.

Durch die beschriebene Konstruktion einer Verpolschutzeinrichtung erhält man den gewünschten sicheren Schutz von Verbrauchern gegen Verpolung oder zu hohen Spannungswerten bei einer gleichzeitig kostengünstigen Herstellung und einer aufwandsarmen Reparatur. Darüber hinaus ist eine kompakte Bauweise gewährleistet.

Es versteht sich von selbst, dass das beschriebene Ausführungsbeispiel nur eins aus einer Vielzahl von möglichen Ausführungsbeispielen ist. Beispielsweise ist in dem dargestellten Ausführungsbeispiel aus Gründen der Übersichtlichkeit als Detektoreinrichtung lediglich eine Zenerdiode abgebildet, wobei eine Implementierung mehrere Dioden oder andere Halbleiterelemente, sowie weitere Bauelemente aufweisen kann.

## Patentansprüche

1. Verpolschutzeinrichtung (12) mit
- einer pyrotechnischen Trenneinheit (32),
- einer Detektoreinrichtung (24),
- einem Auslöserelement (26),
- einem ersten mit zumindest einem Verbraucheranschluss (36) elektrisch verbundenem Anschlusselement (14), und
- einem zweiten einen Versorgungsstützpunkt (34) mit dem ersten Anschlusselement (14) elektrisch verbindendem Anschlusselement (16),
**dadurch gekennzeichnet,**
- **dass** die pyrotechnische Trenneinheit (32) an zumindest einem der Anschlusselemente (14, 16) angeordnet ist,
- **dass** das Auslöserelement (26) einen ersten gegenüber den Anschlusselementen (14, 16) elektrisch isolierten Anschluss (30) zur Detektoreinrichtung (24) aufweist, und
- **dass** das Auslöserelement (26) einen zweiten innerhalb der pyrotechnischen Trenneinheit (32) mit einem der Anschlusselemente (14, 16) verbundenen Anschluss (28) aufweist, derart
**dass** im Verpolfall ein Stromfluss von dem zweiten Anschluss (28) über das innerhalb der pyrotechnischen Trenneinheit (32) angeordnete Auslöserelement (26) zu dem ersten Anschluss (30) und der Detektoreinrichtung eine eine elektrische Trennung der Anschlusselemente (14, 16) bewirkende Zündung der pyrotechnischen Trenneinheit (32) bewirkt.

2. Verpolschutzeinrichtung (12) nach einem der zuvor genannten Ansprüche, **dadurch gekennzeichnet, dass** zumindest eines der Anschlusselemente (14, 16) eine Öffnung zur Durchführung des ersten isolierten Anschlusses (30) aufweist.

3. Verpolschutzeinrichtung (12) nach einem der zuvor genannten Ansprüche, **dadurch gekennzeichnet, dass** der erste Anschluss (30) zumindest innerhalb der Öffnung vollständig mit einer Isolierschicht (22) umgeben ist.

4. Verpolschutzeinrichtung (12) nach einem der zuvor genannten Ansprüche, **dadurch gekennzeichnet, dass** die Detektoreinrichtung (24) außerhalb der Anschlusselemente (14, 16) angeordnet ist

5. Verpolschutzeinrichtung (12) nach einem der zuvor genannten Ansprüche, **dadurch gekennzeichnet, dass** die durch den Stromfluss im Auslöserelement (26) erzeugte Joulesche Wärme eine Zündung der pyrotechnischen Trenneinheit (32) bewirkt, und/oder dass die durch einen zulässigen Stromfluss in den beiden Anschlusselementen (14, 16) erzeugbare Joulesche Wärme unterhalb der zur Zündung der pyrotechnischen Trenneinheit (32) benötigten Jouleschen Wärme liegt.

6. Verpolschutzeinrichtung (12) nach einem der zuvor genannten Ansprüche, **dadurch gekennzeichnet, dass** die Detektoreinrichtung (24) zumindest ein Halbleiterelement umfasst, und/oder dass die Detektoreinrichtung (24) einen Masseanschluss (38) aufweist.

7. Verpolschutzeinrichtung (12) nach einem der zuvor genannten Ansprüche, **dadurch gekennzeichnet, dass** zumindest das eine Halbleiterelement eine Zenerdiode (46) ist.

8. Verpolschutzeinrichtung (12) nach Anspruch 1, **dadurch gekennzeichnet, dass** der zweite Anschluss (28) mit einem der Anschlusselemente (14, 16) durch eine Löt- oder eine Schweißverbindung gebildet ist.

9. Verpolschutzeinrichtung (12) nach einem der zuvor genannten Ansprüche, **dadurch gekennzeichnet, dass** das erste Anschlusselement (14) mit dem zweiten Anschlusselement (16) stoffschlüssig verbunden ist, und/oder dass das erste Anschlusselement (14) mit dem zweiten Anschlusselement (16) kraftschlüssig verbunden ist.

10. Verpolschutzeinrichtung (12) nach einem der zuvor genannten Ansprüche **dadurch gekennzeichnet, dass** das zweite Anschlusselement (16) eine Aufnahme (20) aufweist, und/oder dass die Aufnahme (20) einstückig aus dem zweiten Anschlusselement (16) geformt ist, und/oder **dadurch gekennzeichnet, dass** die Aufnahme (20) ein aus dem zweiten Anschlusselement (16) konisch geformter Topf ist.

11. Verpolschutzeinrichtung (12) nach einem der zuvor genannten Ansprüche, **dadurch gekennzeichnet, dass** die pyrotechnische Trenneinheit (32) in der Aufnahme (20) des zweiten Anschlusselements (16) angeordnet ist.

12. Verpolschutzeinrichtung (12) nach einem der zuvor genannten Ansprüche, **dadurch gekennzeichnet, dass** das erste Anschlusselement (14) einen zu der Aufnahme (20) des zweiten Anschlusselements (16) korrespondierenden Vorsprung (18) aufweist, derart dass im leitenden Zustand der Vorsprung (18) kraftschlüssig und stoffschlüssig in der Aufnahme (20) des zweiten Anschlusselements (16) angeordnet ist.

13. Verpolschutzeinrichtung (12) nach einem der zuvor genannten Ansprüche, **dadurch gekennzeichnet, dass** der Vorsprung (18) einstückig aus dem ersten Anschlusselement (14) geformt ist, und/oder dass der Vorsprung (18) mit der Aufnahme (20) nach dem Fügen einen konischen Presssitz bildet.

14. Verpolschutzeinrichtung (12) nach einem der zuvor genannten Ansprüche, **dadurch gekennzeichnet, dass** die Verpolschutzeinrichtung (12) eine Erfassungseinrichtung zum Erfassen einer Trennung des ersten Anschlusselements (14) vom dem zweiten Anschlusselement (16) aufweist.

15. Verfahren zum Unterbrechen eines Stromes, insbesondere mit einer Verpolschutzeinrichtung (12) nach einem der Ansprüche 1 bis 14,
bei dem ein erster Strom von einem Versorgungsstützpunkt (34) über ein mit einem ersten Anschlusselement (14) verbundenes zweites Anschlusselement (16) zu einem Verbraucheranschluss (36) fließt,
bei dem ein zweiter Strom von einem zweiten innerhalb der pyrotechnischen Trenneinheit (32) mit einem der Anschlusselemente (14, 16) verbundenen Anschluss (28) durch ein Auslöserelement (26) über einen ersten isolierten Anschluss (30) zu einer Detektoreinrichtung (24) fließt, derart
dass dieser zweite Strom eine Zündung einer pyrotechnischen Trenneinheit (32) bewirkt,
wobei die Zündung der pyrotechnischen Trenneinheit (32) den Strom vom zweiten Anschlusselement (14) zum ersten Anschlusselement (16) unterbricht.

## Claims

1. Polarity reversal protection unit (12) with
- a pyrotechnic disconnecting unit (32),
- a detector device (24),
- a tripping element (26),
- a first connection element (14) electrically connected to at least a consumer connection (36), and
- a second connection element (16) electrically connecting a supply support point (34) with the first connection element (14), **characterised in that**
- the pyrotechnic disconnecting unit (32) is arranged on at least one of the connection elements (14, 16),
- the tripping element (26) has a first connection (30) electrically insulated from the connection elements (14, 16) to the detector device (24), and
- the tripping element (26) has a second connection (28) with one of the connection elements (14, 16) within the pyrotechnic disconnecting unit (32), so that in case of a polarity reversal a current flow from the second connection (28) via the tripping element (26) arranged within the pyrotechnic disconnecting unit (32) to the first connection (30) and the detector device (24) brings about a triggering of the pyrotechnic disconnecting unit (32) causing an electrical disconnection of the connection elements (14, 16).

2. Polarity reversal protection unit (12) according to one of the above claims, **characterised in that** at least one of the connection elements (14, 16) has an opening for passing through the first insulated connection (30).

3. Polarity reversal protection unit (12) according to one of the above claims, **characterised in that** the first connection (30) at least within the opening is completely enclosed by an insulation layer (22).

4. Polarity reversal protection unit (12) according to one of the above claims, **characterised in that** the detector device (24) is arranged outside of the connection elements (14, 16).

5. Polarity reversal protection unit (12) according to one of the above claims, **characterised in that** the Joule heat generated by the flow of current in the tripping element (26) causes a triggering of the pyrotechnic disconnecting unit (32) and/or the Joule heat generated by the permitted flow of current in the two connection elements (14, 16) is below the Joule heat necessary for triggering the pyrotechnic disconnecting unit (32).

6. Polarity reversal protection unit (12) according to one of the above claims, **characterised in that** the detector device (24) comprises at least one semiconductor element, and/or the detector device (24) has an ground connection (38).

7. Polarity reversal protection unit (12) according to one of the above claims, **characterised in that** the at least one semiconductor element (46) is a Zener diode.

8. Polarity reversal protection unit (12) according to claim 1, **characterised in that** the second connection (28) with one of the connection elements (14, 16) is in the form of a soldered or welded connection.

9. Polarity reversal protection unit (12) according to one of the above claims, **characterised in that** the first connection element (14) has a firmly bonded connection with the second connection element (16), and/or the first connection element (14) has a friction locked connection with the second connection element (16).

10. Polarity reversal protection unit (12) according to one of the above claims, **characterised in that** the second connection element (16) has a receptacle (20), and/or
the receptacle (20) is formed as a single unit with the second connection element, and/or
**characterised in that** the receptacle (20) is a conically shaped pot formed from the second connection element (16).

11. Polarity reversal protection unit (12) according to one of the above claims, **characterised in that** the pyrotechnic disconnecting unit (32) is arranged in the receptacle (20) of the second connection element (16).

12. Polarity reversal protection unit (12) according to one of the above claims, **characterised in that** the first connection element (14) has a projection (18) corresponding with the receptacle (20) of the second connection element (16), so that in the conducting state the projection (18) is arranged with a friction-locked and firmly bonded connection in the receptacle (20) of the second connection unit (16).

13. Polarity reversal protection unit (12) according to one of the above claims, **characterised in that** the projection (18) is formed as a single unit with the first connection element (14), and/or the projection (18) with the receptacle (20) following joining forms a conical press fit.

14. Polarity reversal protection unit (12) according to one of the above claims, **characterised in that** the polarity reversal protection unit (12) has an acquisition device to detect a disconnection of the first connection element (14) from the second connection element (16).

15. Method for interrupting a current, in particular with a polarity reversal protection unit (12) according to one of claims 1 to 14, in which a first current flows from a supply support point (34) via a second connection element (16) connected with a first connection element (14) to a consumer connection (36),
in which a second current flows from a second connecting connected with one of the connection elements (14, 16) within the pyrotechnic disconnecting unit (32) through a tripping element (26) via a first insulated connection (30) to a detector device (24), such that this second current brings about a triggering of a pyrotechnic disconnecting unit (32), wherein the triggering of the pyrotechnic disconnecting unit (32) interrupts the current from the second connection element (14) to the first connection element (16).

## Revendications

1. Unité de protection contre l'inversion de polarité (12), avec
- une unité de séparation pyrotechnique (32),
- un dispositif de détection (24),
- un élément de déclenchement (26),
- un premier élément de raccordement (14), qui est relié électriquement à au moins un branchement de consommateur (36) et
- un deuxième élément de raccordement (16), qui relie électriquement une base d'alimentation (34) au premier élément de raccordement (14),
**caractérisée en ce que**
- l'unité de séparation pyrotechnique (32) est agencée sur au moins l'un des éléments de raccordement (14, 16),
- l'élément de déclenchement (26) est doté d'un premier raccord (30) au dispositif de détection (24), qui est isolé électriquement par rapport aux éléments de raccordement (14, 16), et
- l'élément de déclenchement (26) est doté d'un deuxième raccord (28), qui, à l'intérieur de l'unité de séparation pyrotechnique (32), est relié à l'un des éléments de raccordement (14, 16) de sorte que, dans le cas d'une inversion de polarité un flux de courant, du deuxième raccord (28) au premier raccord (30) et au dispositif de détection, passant par l'élément de déclenchement (26) agencé dans l'unité de séparation pyrotechnique (32), provoque un allumage de l'unité de séparation pyrotechnique (32), provoquant une séparation électrique des éléments de raccordement (14, 16).

2. Unité de protection contre l'inversion de polarité (12) selon l'une des revendications précédentes, **caractérisée en ce qu'**au moins l'un des éléments de raccordement (14, 16) est doté d'une ouverture pour le passage du premier raccord isolé (30)

3. Unité de protection contre l'inversion de polarité (12) selon l'une des revendications précédentes, **caractérisée en ce que** le premier raccord (30) est, au moins à l'intérieur de l'ouverture, entièrement entouré d'une couche isolante (22).

4. Unité de protection contre l'inversion de polarité (12) selon l'une des revendications précédentes, **caractérisée en ce que** le dispositif de détection (24) est disposé à l'extérieur des éléments de raccordement (14, 16).

5. Unité de protection contre l'inversion de polarité (12) selon l'une des revendications précédentes, **caractérisée en ce que** l'énergie thermique par effet Joule, générée par le flux de courant dans l'élément de déclenchement (26), provoque un allumage de l'unité de séparation pyrotechnique (32) et / ou que l'énergie thermique par effet Joule, générée dans les deux éléments de raccordement (14, 16) par un flux de courant admissible, est inférieure de l'énergie thermique par effet Joule nécessaire à l'allumage de l'unité de séparation pyrotechnique (32).

6. Unité de protection contre l'inversion de polarité (12) selon l'une des revendications précédentes, **caractérisée en ce que** le dispositif de détection (24) comprend au moins un élément semi-conducteur et / ou que le dispositif de détection (24) est doté d'un raccord à la masse (38).

7. Unité de protection contre l'inversion de polarité (12) selon l'une ou plusieurs des revendications précédentes, **caractérisée en ce qu'**au moins l'élément semi-conducteur au moins prévu est une diode Zener (46).

8. Unité de protection contre l'inversion de polarité (12) selon la revendication 1, **caractérisée en ce que** le deuxième raccord (28) avec l'un des éléments de raccordement (14, 16) est formé par un joint de brasage ou un cordon de soudure.

9. Unité de protection contre l'inversion de polarité (12) selon l'une des revendications précédentes, **caractérisée en ce que** la le premier élément de raccordement (14) est relié au deuxième élément de raccordement (16) par fusion de matière et / ou que le premier élément de raccordement (14) est relié au deuxième élément de raccordement (16) par adhérence.

10. Unité de protection contre l'inversion de polarité (12) selon l'une des revendications précédentes, **caractérisée en ce que** le deuxième élément de raccordement (16) est doté d'un logement (20) et / ou que le logement (20) est formé d'une pièce sur le deuxième élément de raccordement (16) et / ou **caractérisé en ce que** le logement (20) est un pot conique, formé à partir du deuxième élément de raccordement (16).

11. Unité de protection contre l'inversion de polarité (12) selon l'une des revendications précédentes, **caractérisée en ce que** l'unité de séparation pyrotechnique (32) est disposée dans le logement (20) du deuxième élément de raccordement (16).

12. Unité de protection contre l'inversion de polarité (12) selon l'une des revendications précédentes, **caractérisée en ce que** le premier élément de raccordement (14) est doté d'une saillie (18), qui correspond au logement (20) du deuxième élément de raccordement (16), de sorte que, à l'état conducteur, la saillie (18) est logée par adhérence et par fusion de matière dans le logement (20) du deuxième élément de raccordement (16).

13. Unité de protection contre l'inversion de polarité (12) selon l'une des revendications précédentes, **caractérisée en ce que** la saillie (18) est formée d'une pièce à partir du premier élément de raccordement (14) et / ou que la saillie (18) et le logement (20), après assemblage, forment ensemble un ajustage serré, conique.

14. Unité de protection contre l'inversion de polarité (12) selon l'une des revendications précédentes, **caractérisée en ce que** ladite unité de protection contre l'inversion de polarité (12) est dotée d'un système de détection pour la détection d'une séparation du premier élément de raccordement (14) du deuxième élément de raccordement (16).

15. Procédé d'interruption de courant, en particulier avec une unité de protection contre l'inversion de polarité (12) selon l'une des revendications 1 à 14,
- dans lequel un premier courant circule d'une base d'alimentation (34) à un branchement de consommateur (36), par l'intermédiaire d'un deuxième élément de raccordement (16), qui est relié à un premier élément de raccordement (14),
- dans lequel un deuxième courant, passant par un élément de déclenchement (26), circule d'un deuxième raccord (28), relié à l'intérieur de l'unité de séparation pyrotechnique (32) à l'un des éléments de raccordement (14, 16), à un dispositif de détection (24), par l'intermédiaire d'un premier raccord isolé (30), de sorte que ce deuxième courant provoque un allumage d'une unité de séparation pyrotechnique (32),
sachant que l'allumage de l'unité de séparation pyrotechnique (32) interrompit le courant entre le premier élément de raccordement (14) et le deuxième élément de raccordement (16).
